# EUROPEAN PATENT APPLICATION

(11) **EP 2 075 996 A1**
(43) Date of publication of application: **01.07.2009**
(21) Application number: 08165660.5
(22) Date of filing: 01.10.2008
(51) Int. Cl.: H04M 1/247, G06F 3/048

(54) **Method for providing a quick list using an end key of a mobile communication device**

(30) Priority: 31.12.2007 TW 96151409
(71) Applicant: High Tech Computer, Corp., Taoyuan City Taoyuan County 330 (TW)
(72) Inventor: Chang, Yuan-Chen, 330, Taoyuan City, Taoyuan County (TW); Chen, Hsueh-Chun, 330, Taoyuan City, Taoyuan County (TW)
(74) Representative: 2K Patentanwälte Blasberg Kewitz & Reichel

(57) **Abstract**

A method for providing a quick list using an end key applied in a mobile communication device is disclosed. The mobile communication device receives a trigger signal (S21) generated by pressing an end key thereof and determines whether the time of continuously receiving the trigger signal reaches a predefined threshold value (S22). If so, a quick list is displayed on a panel of the mobile communication device (S24).

## Description

### CROSS REFERENCE TO RELATED APPLICATIONS

This Application claims priority of Taiwan Patent Application No. 96151409, filed on December 31, 2007, the entirety of which is incorporated by reference herein.

### BACKGROUND OF THE INVENTION

### Field of the Invention

The invention relates to a mobile communication device, and more particularly to a method for providing a quick list using an end key applied in a mobile communication device.

### Description of the Related Art

Currently, a mobile phone call can be terminated by pressing a key, such as an end key, for example.

Applications for an end key comprise terminating a call by pressing the end key while communicating, returning to a last layer of a menu by pressing the end key while browsing the menu, returning to a standby mode by extended pressing of the end key, and locking a panel or shutting down a mobile phone by extended pressing of the end key during a standby mode. Additionally, an application can be terminated using the end key.

However, the operation methods for choosing applications are not convenient for the user. Thus, a method for providing a quick list using an end key for a mobile communication device is desirable.

### BRIEF SUMMARY OF THE INVENTION

Methods for providing a quick list using an end key are provided. An exemplary embodiment of a method for providing a quick list using an end key comprises the following. A trigger signal generated by pressing the end key of a mobile communication device is received. It is determined whether a time of continuously receiving the trigger signal reaches a predefined threshold value. If the time of continuously receiving the trigger signal reaches the predefined threshold value, an operational state of the mobile communication device is switched.

Mobile communication devices are provided. An exemplary embodiment of a mobile communication device comprises a panel, a keypad comprising an end key, a memory, a signal receiving module, and a microcontroller. The memory stores a quick list corresponding to the end key of the mobile communication device. The signal receiving module receives a trigger signal generated by pressing the end key. The microcontroller receives the trigger signal from the signal receiving module and displays a quick list on the panel when a time of continuously receiving the trigger signal reaches a predefined threshold value.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Figs. 1 A ∼ 1C are schematic views of providing a quick list using an end key of the present invention;

Fig. 2 is a flowchart of a method for providing a quick list using an end key of the present invention; and

Fig. 3 is a schematic view of a mobile communication device of the present invention.

### DETAILED DESCRIPTION OF THE INVENTION

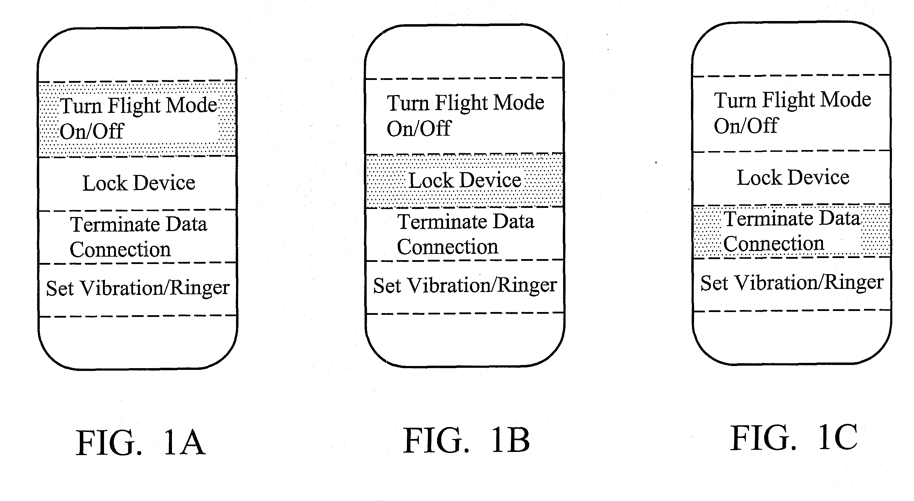

Several exemplary embodiments of the invention are described with reference to Figs. 1 through 3, which generally relate to providing a quick list using an end key. It is to be understood that the following disclosure provides various different embodiments as examples for implementing different features of the invention. Specific examples of components and arrangements are described in the following to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various described embodiments and/or configurations.

The invention discloses a method for providing a quick list using an end key for a mobile communication device.

An embodiment of the method displays a quick list on a panel of a mobile communication device when an end key of the mobile communication device is extendedly pressed. The quick list comprises items such as "Turn Flight Mode On/Off', "Lock Device", "Terminate Data Connection", and "Set Vibration/Ringer", as shown in Fig. 1. The described items are only examples, which are not to be limitative, and other functions convenient for users may also be included in the quick list.

When a quick list is opened by extended pressing of an end key, a desired function, such as " Turn Flight Mode On/Off ", "Lock Device", or "Terminate Data Connection", is preformed by using a directional key (for a smart phone, for example) or directly touching a touch pad (for a Personal Digital Assistant (PDA), for example), as shown in Figs. 1A ∼ 1C.

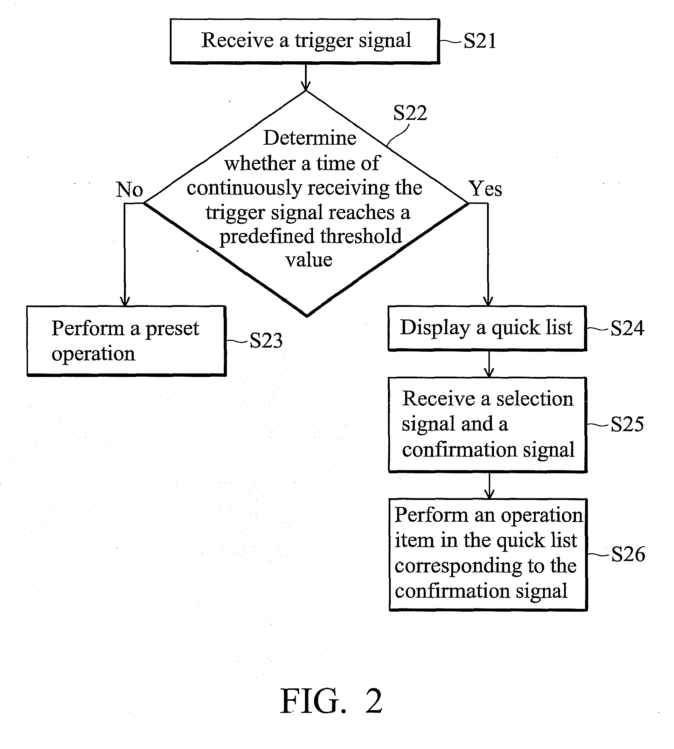

Fig. 2 is a flowchart of a method for providing a quick list using an end key of the present invention.

When a trigger signal generated by pressing the end key of a mobile communication device is received (step S21), it is determined whether a time of continuously receiving the trigger signal reaches a predefined threshold value (2 seconds, for example) (step S22). If the time of continuously receiving the trigger signal does not reach the predefined threshold value, a preset operation (such as terminating a call, returning to a last layer of a menu, and the like) is performed corresponding to the end key of the mobile communication device (step S23).

If the time of continuously receiving the trigger signal reaches the predefined threshold value, a quick list providing plural preset operation items is displayed on a panel of the mobile communication device (step S24). When a selection signal and a confirmation signal generated by pressing a button or touching the panel is received by the mobile communication device (step S25), an operation item in the quick list corresponding to the confirmation signal is performed (step S26).

It is noted that when a mobile communication device runs under different modes or performs different functions or applications, another operation may be performed instead of displaying a quick list. In this embodiment, extended pressing of an end key of the mobile communication device to display the quick list, while the mobile communication device operates in standby mode is illustrated and other conditions are not further described. Further, an embodiment of the method defines extended pressing of an end key of a mobile communication device to display a quick list without respect to which operational mode the mobile communication device is operating under.

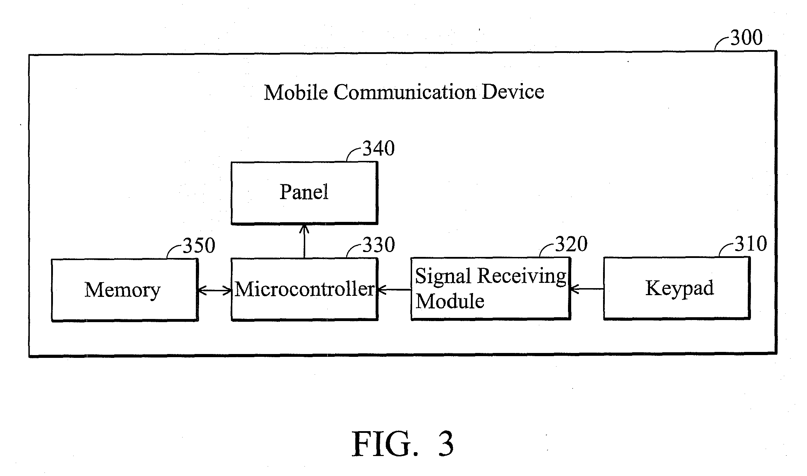

Fig. 3 is a schematic view of a mobile communication device of the present invention.

An embodiment of a mobile communication device 300 at least comprises a keypad 310, a signal receiving module 320, a microcontroller 330, a panel 340, and a memory 350. The keypad 310 comprises an end key (not shown). The memory 350 stores a quick list, providing plural preset operation items, corresponding to the end key.

The microcontroller 330 receives a trigger signal generated by pressing the end key from the signal receiving module 320 and displays a quick list stored in the memory 350 on the panel 340 when a time of continuously receiving the trigger signal reaches a predefined threshold value (2 seconds, for example).

When a selection signal and a confirmation signal generated by pressing a button of the keypad 310 or touching the panel 340 is received, the microcontroller 330 performs an operation item in the quick list corresponding to the confirmation signal. If the time of continuously receiving the trigger signal does not reach the predefined threshold value, the microcontroller 330 performs a preset operation (such as terminating a call, returning to a last layer of a menu, and the like) corresponding to the end key

Methods and systems of the present disclosure, or certain aspects or portions of embodiments thereof, may take the form of a program code (i.e., instructions) embodied in media, such as floppy diskettes, CD-ROMS, hard drives, firmware, or any other machine-readable storage medium, wherein, when the program code is loaded into and executed by a machine, such as a computer, the machine becomes an apparatus for practicing embodiments of the disclosure. The methods and apparatus of the present disclosure may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing and embodiment of the disclosure. When implemented on a general-purpose processor, the program code combines with the processor to provide a unique apparatus that operates analogously to specific logic circuits.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for providing a quick list using an end key, applied to a mobile communication device, comprising:
receiving a trigger signal generated by pressing the end key of the mobile communication device;
determining whether a time of continuously receiving the trigger signal reaches a predefined threshold value; and
if the time of continuously receiving the trigger signal reaches the predefined threshold value, switching an operational state of the mobile communication device.

2. The method for providing a quick list using an end key as claimed in claim 1, wherein switching the operational state further comprises displaying a quick list providing plural preset operation items on a panel of the mobile communication device.

3. The method for providing a quick list using an end key as claimed in claim 2, wherein switching the operational state further comprises directly performing one of the preset operation items.

4. The method for providing a quick list using an end key as claimed in claim 1, further comprising:
receiving a selection signal and a confirmation signal generated by pressing a button or touching the panel using the mobile communication device; and
performing an operation item in the quick list corresponding to the confirmation signal.

5. The method for providing a quick list using an end key as claimed in claim 1, further comprising performing a preset operation corresponding to the end key using the mobile communication device if the time of continuously receiving the trigger signal does not reach the predefined threshold value.

6. A mobile communication device, comprising:
a panel;
a keypad, comprising an end key;
a memory, storing a quick list corresponding to the end key of the mobile communication device;
a signal receiving module, receiving a trigger signal generated by pressing the end key; and
a microcontroller, receiving the trigger signal from the signal receiving module and displaying a quick list on the panel when a time of continuously receiving the trigger signal reaches a predefined threshold value.

7. The mobile communication device as claimed in claim 8, wherein, when a selection signal and a confirmation signal generated by pressing a button or touching the panel is received, the microcontroller performs an operation item in the quick list corresponding to the confirmation signal.

8. The mobile communication device as claimed in claim 8, wherein the microcontroller performs a preset operation corresponding to the end key if the time of continuously receiving the trigger signal does not reach the predefined threshold value.

9. A computer-readable storage medium storing a computer program providing a method for providing a quick list using an end key, comprising using a computer to perform the steps of:
codes for receiving a trigger signal generated by pressing the end key of a mobile communication device;
codes for determining whether a time of continuously receiving the trigger signal reaches a predefined threshold value; and
codes for switching an operational state of the mobile communication device if the time of continuously receiving the trigger signal reaches the predefined threshold value.

10. The computer-readable storage medium as claimed in claim 12, further comprising:
codes for receiving a selection signal and a confirmation signal generated by pressing a button or touching the panel using the mobile communication device; and
codes for performing an operation item in the quick list corresponding to the confirmation signal.
